# EUROPÄISCHE PATENTSCHRIFT

(11) **EP 0 404 889 B1**
(45) Veröffentlichungstag und Bekanntmachung des Hinweises auf die Patenterteilung: **22.09.1993**
(21) Anmeldenummer: 89913033.0
(22) Anmeldetag: 09.11.1989
(51) Int. Cl.: B01D 17/04, B01D 46/24

(54) **PHASENTRENNELEMENT**
PHASE-SEPARATING ELEMENT
ELEMENT DE SEPARATION DE PHASES

(30) Priorität: 14.11.1988 DE 8814236 U
(43) Veröffentlichungstag der Anmeldung: 02.01.1991
(73) Patentinhaber: Franken Filtertechnik oHG, D-50329 Hürth (DE)
(72) Erfinder: FRANKEN, Heinz, D-5303 Bornheim 2 (DE); FRANKEN, Hans, D-5020 Frechen 4 (DE)
(74) Vertreter: Freischem, Werner, Dipl.-Ing.
(86) Internationale Anmeldenummer: EP8901336
(87) Internationale Veröffentlichungsnummer: WO9005573

(56) Entgegenhaltungen:
- DE-B- 2 852 385
- GB-A- 1 104 643
- GB-A- 1 345 155
- US-A- 3 415 384
- US-A- 4 240 908

## Beschreibung

Die Erfindung bezieht sich auf ein Phasentrennelement zur Abscheidung einer flüssigen, diskontinuierlichen Nebenphase aus einer flüssigen Hauptphase oder von Aerosolen aus einer gasförmigen Hauptphase mit einem Grundkörper, der sich zusammensetzt aus einem Aufnahmeteil, einem Kopfteil und einem zwischen Aufnahmeteil und Kopfteil angeordneten und diese Teile verbindenden gelochten Kernrohr und mit einer auf das Kernrohr aufgewickelten Faserpackung, welche den Lochungsbereich des Kernrohres beidseitig mit Überstand überragt, deren Stirnseiten an Anschlagflächen des Aufnahmeteils und des Kopfteils anliegen und die von einer Stützbandage umgeben ist.

Bei der Strömung eines Phasengemisches durch eine Faserschicht benetzen die Flüssigkeitspartikel der diskontinuierlichen Phase die Faseroberfläche und bilden mit zunehmendem Fließweg einen mit der Hauptströmung zur Austrittsseite wandernden Flüssigkeitsfilm, der sich am Austritt aus der Faserschicht periodisch als großer, quasi spontan abscheidender Tropfen ablöst.

Die bekannten Phasentrennelemente dieser Art werden dadurch hergestellt, daß die Faserpackung auf ein Kernrohr aufgebracht und gleichzeitig mit einem Bindemittel, vorzugsweise Phenolharz, getränkt wird, damit die Fasern nach der Aushärtung fixiert sind. Um zu verhindern, daß das Phasengemisch unter Umgehung der Faserschicht die Faserpackung im Bereich ihrer Enden umfließt, werden die beiden axialen Endbereiche der Faserschicht mit einem Klebstoff oder einer aushärtenden Formmasse vergossen und gleichzeitig mit den Anschlagflächen des Aufnahmeteils und des Kopfteils verklebt (vergl. z.B. GB-A-1 345 155 oder US-A-4 240 908). Die bekannten Phasentrennelemente haben den Nachteil, daß sie in chemischen Prozessen nur beschränkt einsetzbar sind, weil insbesondere die für die Abdichtung an den Enden der Faserpackung verwendeten Stoffe gegen organische Flüssigkeiten, wie Lösungsmittel, Alkohole, Aldehyde oder dergleichen nicht beständig sind.

Der Erfindung liegt die Aufgabe zugrunde, Phasentrennelemente mit einer Coalisierschicht aus Fasern, insbesondere Glasfasern, Metallfasern oder monofilen Kunststoff-Fasern dahingehend zu verbessern, daß die Faserpackung ohne Bindemittel aufgebracht werden kann und zur Abdichtung der Faserpackung gegen die Anschlagflächen des Aufnahmeteils und des Kopfteils keinerlei Klebstoffe oder sonstige lösliche Stoffe erforderlich sind.

Diese Aufgabe wird erfindungsgemäß dadurch gelöst, daß an den Endbereichen der Faserpackung zwischen Kernrohr und Faserpackung je ein konischer Wulstring angeordnet ist, dessen zum Kernrohr hin geneigte Fläche im Winkel von kleiner als 45° zur Achse des Kernrohres geneigt ist und dessen Gipfel sich im Abstand von der benachbarten Anschlagfläche befindet und an den Enden der Faserpackung die Faserpackung umschließende Dichtringe angeordnet sind, welche sich axial von den Anschlagflächen bis etwa zu den Gipfeln der Wulstringe erstrecken, und die Dichtringe und Wulstringe im Verhältnis zur Dicke und Art der Faserpackung so dimensioniert sind, daß unter maximal zulässigem Differenzdruck eine Durchströmung verhindert ist.

Zweckmäßigerweise hat der Querschnitt der Dichtringe im wesentlichen die Form eines rechteckigen Dreiecks. Der Dichtring weist eine zylindrische, mit der Mantelfläche der Faserpackung fluchtende Mantelfläche und eine dazu rechtwinklige Seitenfläche auf, die an der Anschlagfläche des Aufnahmeteils und des Kopfteils anliegt. Die Konusfläche der Dichtringe drückt in den axialen Endbereichen die Faserpackung ringsum dichtend zusammen. Damit sich die Kompressionszonen in den Endbereichen der Faserpackung über einen größeren axialen Bereich erstrecken, sind die Wulstringe bzw. deren Gipfel im Abstand von den Anschlagflächen angeordnet. Dadurch wird ferner erreicht, daß die Enden der Faserpackung nicht von den konischen Wulstringen abrutschen können. Die zum Kernrohr hin abfallende Seite der Wulstringe verläuft zur Achse des Kernrohres in einem Winkel von vorzugsweise 30°, während die andere, vom Gipfel abfallende Seite steiler zur Achse des Kernrohres geneigt sein kann.

Dadurch, daß die Kompression der Faserpackung infolge der Dichtringe am Ende der Faserpackung und infolge des Wulstringes auch im Abstand von den Anschlagflächen erfolgt, kann auf eine feste Verbindung der Fasern durch Kleber oder andere Werkstoffe mit den Endscheiben verzichtet werden.

Die Anordnung und Ausbildung der Wulstringe hat den weiteren Vorteil, daß die von der Konusfläche der Dichtringe radial und axial in die hohlzylindrische Faserpackung eingeleiteten Druckkräfte von den Wulstringen aufgefangen werden, so daß der Bereich der Faserpackung, der zwischen den beiden Wulstringen und über dem Lochungsbereich des Kernrohres liegt, nicht von diesen Kräften verdichtet wird. Die eine zuverlässige Abdichtung bewirkenden Kompressionskräfte wirken nur in den Bereichen zwischen den beiden Wulstringen und den dazugehörenden Dichtringen . Die Wulstringe und die Dichtringe sind so geformt, daß trotz der hohen Druckkräfte keine die Fasern, insbesondere Glasfasern, verletzenden Belastungen auftreten.

Der Dichtring komprimiert die Faserpackung in ihren Endbereichen, ohne daß eine starre Einspannung geschaffen wird.

Ein Spalt zwischen Faserpackung und den Anschlagflächen, wie er insbesondere bei der Wärmedehnung eines langen Phasentrennelementes aus thermoplastischem Kunststoff entsteht, beeinflußt bei dem erfindungsgemäßen Gerät nicht die Dichtigkeit. Gleichzeitig wird verhindert, daß die wesentlich höhere Wärmeausdehnung des Grundkörpers gegenüber der Faserpackung zu einem Zerreißen der Fasern führen kann, wie dies bei einer starren Einspannung der Fall ist.

In der folgenden Beschreibung werden Ausführungsbeispiele der Erfindung unter Bezugnahme auf die Zeichnung näher erläutert. Die Zeichnung zeigt in
- Fig. 1: zur Hälfte eine Seitenansicht und zur Hälfte einen Längsschnitt eines Phasentrennelementes nach der Erfindung,
- Fig. 2: eine vergrößerte Schnittansicht im Bereich des Kopfteils eines zweiten Ausführungsbeispiels,
- Fig. 3: eine Schnittansicht im Bereich des Aufnahmeteils eines dritten Ausführungsbeispiels,
- Fig. 4: eine Schnittansicht im Bereich des Kopfteils eines vierten Ausführungsbeispiels.

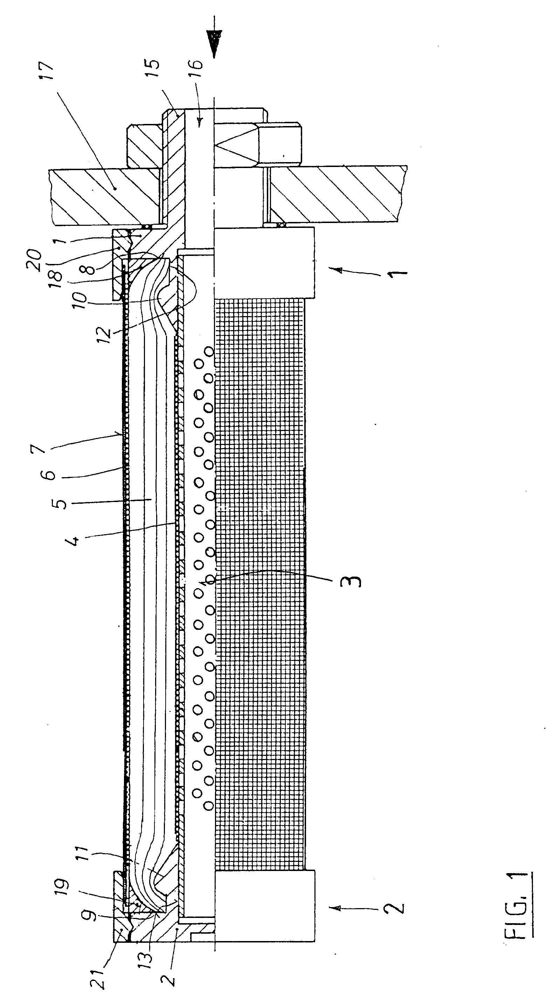

Das in Fig. 1 dargestellte Phasentrennelement weist einen Grundkörper auf, der sich zusammensetzt aus einem Aufnahmeteil 1, einem Kopfteil 2 und einem zwischen Aufnahmeteil 1 und Kopfteil 2 befindlichen gelochten Kernrohr 3. Aufnahmeteil 1, Kopfteil 2 und Kernrohr 3 können aus Kunststoff, vorzugsweise aus Polyvinylidenfluorid (PVDF) oder aus Metall, insbesondere Edelstahl, bestehen.

Das Phasentrennelement ist über einen am Aufnahmeteil 1 angebrachten Gewindeanschluß 15 und eine Mutter auf einer Bodenplatte 17 befestigt. Das Aufnahmeteil 1 ist mit einem Einlaß 16 und einem Aufnahmekragen 12 für das Kernrohr 3 versehen, auf dessen Außenseite im Abstand von der Anschlagfläche 8 ein Wulstring 10 angeordnet ist. Wie das Aufnahmeteil 1 ist auch das Kopfteil 2 mit einer Anschlagfläche 9 und einem Aufnahmekragen 13 für das Kernrohr 3 versehen. Auch hier ist der Aufnahmekragen 13 als konischer Wulstring 11 ausgebindet.

Das Kernrohr 3 kann aus Blech oder Kunststoff bestehen und ist mit einer Lochung versehen, die sich zumindest über den größeren Teil der Länge des Kernrohres 3 zwischen den Endbereichen erstreckt. Das Kernrohr 3 kann aber auch über seine gesamte Länge gelocht sein oder aber auch als Spaltrohr ausgebildet sein. Das Kernrohr 3 ist mit seinen Enden in den Aufnahmekragen 12,13 des Aufnahmeteils 1 und des Kopfteils 2 gehalten. Auf den beiden Aufnahmekragen 12,13 sind die Wulstringe 10,11 angebracht, deren Gipfel 23 sich im Abstand von den Anschlagflächen 8 und 9 befinden. Das Aufnahmeteil 1, das gelochte Kernrohr 3 und das Kopfteil 2 sind starr, zum Beispiel durch Verschweißen, miteinander verbunden.

Vor dem Aufwickeln der Faserpackung 5 auf diesen Grundkörper 1,2,3 wird auf das gelochte Kernrohr 3 eine Gewebelage 4 aufgebracht, um die Fasern vor Beschädigungen zu schützen. Die Länge der Gewebelage 4 wird so bemessen, daß sie die Lochung des Kernrohres 3 überdeckt.

Danach wird eine Fasermatte mit einer definierten Spannung auf das Kernrohr aufgewickelt. Anschließend werden die Wulstringe 10,11 axial zwischen Kernrohr 3 und Faserpackung 5 eingetrieben und die Dichtringe 18,19 angebracht.

Die Stützbandage 6 besteht beispielsweise aus einem Streifen aus monofilem Edelstahl- oder Kunststoff-Gewebe. Diese wird in gleicher Drehrichtung um die Faserpackung 5 gewickelt.

An den Enden wird eine feste Verbindung zwischen dem Grundkörper und der Stützbandage 6 hergestellt. Über die Stützbandage 6 kann nun ein äußerer Hüllschlauch 7 gezogen werden, dessen Maschenweite für die Tropfenbildung der abzutrennenden Phase wichtig ist.

Abschließend werden zwei Kappen 20 und 21 auf das Aufnahmeteil 1 und das Kopfteil 2 aufgesteckt. Diese Verbindung kann als Schnapp-Verbindung ausgebildet werden. Dabei rastet ein auf der Innenfläche der Kappe 20 oder 21 befindlicher Vorsprung, dessen Negativform als umlaufende Nut 27 in das Aufnahmeteil 1 und in das Kopfteil 2 eingedreht ist, in eben diese Nut 27 ein.

Der Durchmesser des Aufnahmeteils 1 und des Kopfteils 2 ist so bemessen, daß er mit dem Durchmesser der Faserpackung 15 übereinstimmt.

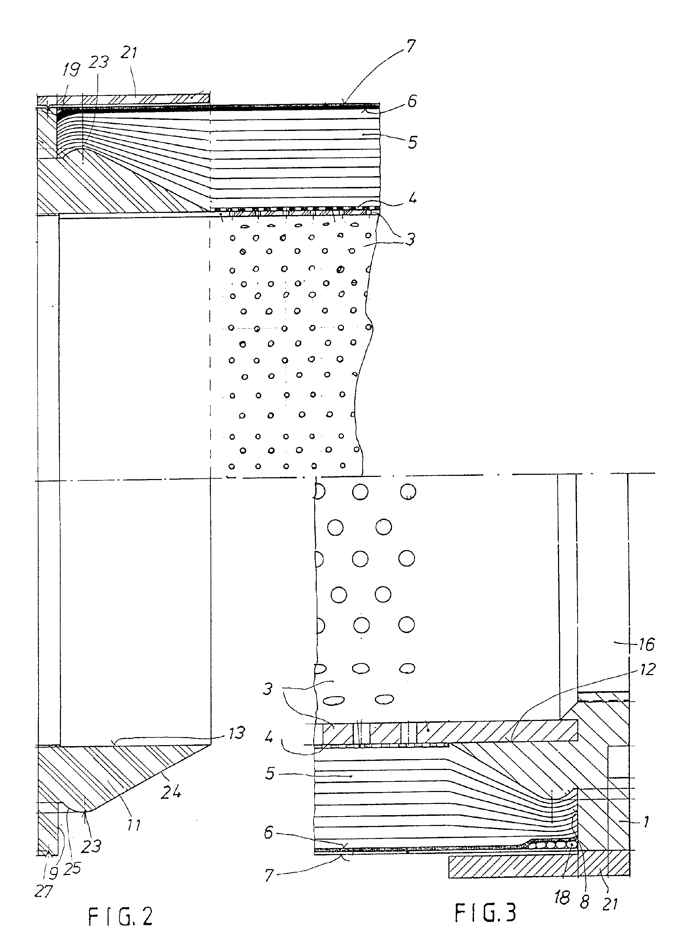

Fig. 2 zeigt eine Schnittansicht eines Kopfteils 2 mit einem Wulstring 11. Der ringartige, das Kernrohr 3 umschliessende Aufnahmekragen 13 ist an seiner Außenseite als Wulstring 11 ausgebildet, dessen zum Kernrohr 3 abfallende Fläche 24 einen Winkel von etwa 30° zur Mantelfläche des Kernrohrs 3 einnimmt. Die andere Fläche 25 des Wulstringes 11 verläuft steiler, etwa in einem Winkel von 60° zur Achse des Kernrohres 3. Der Gipfel 23 des Wulstringes 11 ist etwa in dem axialen Bereich angeordnet, wo der Dichtring 19 endet. Der Dichtring 19 besteht aus einem um das Ende der Faserpackung gewickelten Draht oder Band aus Stahl oder Kunststoff.

In Fig. 3 ist der Dichtring 19 aus Polyvinylidenfluoriddraht gebildet und über der Stützbandage 6 angeordnet. Der Dichtring 19 wird in sich und mit dem Aufnahmeteil 1 verschweißt, sofern dieser aus einem entsprechenden thermoplastischen Kunststoff besteht.

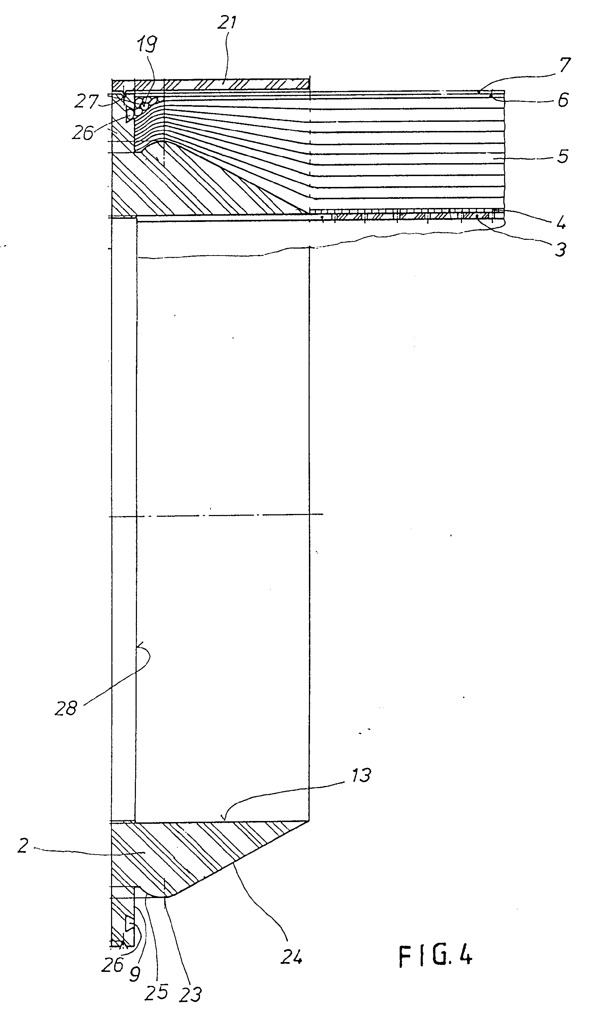

Bei dem Ausführungsbeispiel nach Fig. 4 ist in der Anschlagfläche 9 des beispielsweise aus Edelstahl bestehenden Aufnanmeteils oder Kopfteils eine Ringnut 26 eingearbeitet, die schwalbenschwanzartig hinterschnitten ist. In dieser Ringnut 26 ist der Dichtring 19 verankert. Der Dichtring 19 ist aus mehreren Lagen Kunststoff-Schweißdraht, insbesondere aus PVDF, aufgebaut. Zum Beispiel die erste Lage des Dichtringes 19 ist formschlüssig in der Ringnut 26 verankert.

Bei einem Phasentrennelement, dessen aus Aufnahmeteil 1 , Kopfteil 2 und Kernrohr 3 sich zusammensetzender Grundkörper aus Stahl, insbesondere Edelstahl oder nichtrostendem Stahl, besteht, bei dem also vom Kernrohr 3 oder dem das Kernrohr 3 aufnehmenden Kragen 12 und 13 relativ hohe radial nach innen wirkende Kräfte aufgenommen werden können, kann die der Erfindung zugrundeliegende Aufgabe auch ohne Verwendung von Wulstringen dadurch gelöst werden, daß an den Enden der Faserpackung 5 die Faserpackung 5 umschließende Dichtringe 18,19 angeordnet sind, welche die Faserpackung 5 mit so großer Kraft radial zusammendrücken, daß bei maximal zulässigem Differenzdruck eine Durchströmung oder Umströmung der Endzonen der Faserpackung verhindert ist.

Zur Anwendung kommen Faserpackungen aus Glasfasern, Kunststoff-Fasern oder Metallfasern, deren Faserdicke 2 - 20 µm beträgt. Je verformbarer die Fasern sind, umso dicker können sie im Durchmesser sein, um bei gleichem radial wirkenden Druck dicht zur Anlage zu kommen.

Es ist auch möglich, auf die Endbereiche der Faserpackung 5 die Druckringe 18 und 19 aufzugießen. Die Endbereiche der Faserpackung 5 werden in eine Gießform gebracht, die beim Schließen die Faserpackung radial zusammenpreßt. Der in die Gießform eingebrachte flüssige thermoplastische oder auch duroplastische Kunststoff dringt dabei von den Stirnseiten der Faserpackung 5 etwas in diese ein, wodurch zusätzlich eine Abdichtung bewirkt wird. Die Schrumpfspannung der aufgegossenen Druckringe 18,19 bewirkt eine zuverlässige Abdichtung. Die Druckringe 18 und 19 können mit dem Aufnahmeteil 1 und dem Kopfteil 2 je ein Teil bilden, das auf einem Endbereich der Faserpackung 5 aufgegossen ist.

### Bezugszeichenliste

- 1: Aufnahmeteil
- 2: Kopfteil
- 3: Kernrohr
- 4: Gewebelage
- 5: Faserpackung
- 6: Stützbandage
- 7: Hüllschlauch
- 8: Anschlagfläche
- 9: Anschlagfläche
- 10: konischer Wulstring
- 11: konischer Wulstring
- 12: Aufnahmekragen
- 13: Aufnahmekragen
- 15: Gewindeanschluß
- 16: Einlaß
- 17: Bodenplatte
- 18: Dichtring
- 19: Dichtring
- 20: Kappe
- 21: Kappe
- 23: Gipfel
- 24: flach geneigte Fläche
- 25: steil geneigte Fläche
- 26: Ringnüt
- 27: Nut
- 28: Anschlagbund

## Patentansprüche

1. Phasentrennelement zur Abscheidung einer flüssigen, diskontinuierlichen Nebenphase aus einer flüssigen Hauptphase oder von Aerosolen aus einer gasförmigen Hauptphase mit einem Grundkörper, der sich zusammensetzt aus einem Aufnahmeteil (1) einem Kopfteil (2) und einem zwischen Aufnahmeteil (1) und Kopfteil (2) angeordneten und diese Teile (1,2) verbindenden gelochten Kernrohr (3), und mit einer auf das Kernrohr (3) aufgewickelten Faserpackung (5), die den Lochungsbereich (14) des Kernrohres (3) beidseitig mit Überstand überragt, deren Stirnseiten an Anschlagflächen (8,9) des Aufnahmeteils (1) und des Kopfteils (2) anliegen und die von einer Stützbandage (6) umgeben ist,
dadurch gekennzeichnet, daß an den Endbereichen der Faserpackung (5) zwischen Kernrohr (3) und Faserpackung (5) je ein konischer Wulstring (10,11) angeordnet ist, dessen zum Kernrohr (3) hin geneigte Fläche (24) im Winkel von kleiner als 45° zur Achse des Kernrohres (3) geneigt ist und dessen Gipfel (23) sich im Abstand von der benachbarten Anschlagfläche (8,9) befindet und an den Enden der Faserpackung (5) die Faserpackung (5) umschließende Dichtringe (18,19) angeordnet sind, die sich axial von den Anschlagflächen (8, 9) bis etwa zu den Gipfeln (23) der Wulstringe erstrecken, und die Dichtringe (18,19) und Wulstringe (10,11) im Verhältnis zur Dicke und Art der Faserpackung (5) so dimensioniert sind, daß bei maximal zulässigem Differenzdruck eine Durchströmung oder Umströmung der Endzone der Faserpackung verhindert ist.

2. Phasentrennelement nach Anspruch 1, dadurch gekennzeichnet, daß die zum Kernrohr (3) hin geneigten Flächen (24) der Wulstringe (10,11) im Winkel von etwa 30° zur Achse des Kernrohres (3) geneigt sind.

3. Phasentrennelement nach Anspruch 1 oder 2, dadurch gekennzeichnet, daß die Gipfel (23) der Wulstringe gerundet sind und die geneigten Flächen (24,25) zu beiden Seiten der Gipfel (23) tangential in die Rundung der Gipfel (23) einmünden.

4. Phasentrennelement nach einem der Ansprüche 1 bis 3, dadurch gekennzeichnet, daß die Wulstringe (10,11) einstückig mit dem Aufnahmeteil (1) oder dem Kopfteil (2) verbunden sind und Aufnahmekragen (12,13) zur Aufnahme des Kernrohres (3) bilden.

5. Phasentrennelement zur Abscheidung einer flüssigen, diskontinuierlichen Nebenphase aus einer flüssigen Hauptphase oder von Aerosolen aus einer gasförmigen Hauptphase mit einem Grundkörper aus Stahl, insbesondere nichtrostendem Stahl, der sich zusammensetzt aus einem Aufnahmeteil (1), einem Kopfteil (2) und einem zwischen Aufnahmeteil (1) und Kopfteil (2) angeordneten und diese Teile (1,2) verbindenden gelochten Kernrohr (3), und mit einer auf das Kernrohr (3) aufgewickelten Faserpackung (5), die den Lochungsbereich (14) des Kernrohres (3) beidseitig mit Überstand überragt, deren Stirnseiten an Anschlagflächen (8,9) des Aufnahmeteils (1) und des Kopfteils (2) anliegen und die von einer Stützbandage (6) umgeben ist,
dadurch gekennzeichnet, daß an den Enden der Faserpackung (5) die Faserpackung (5) umschließende und zusammendrückende Dichtringe (18,19) angeordnet sind, die im Verhältnis zur Dicke und Art der Faserpackung (5) so dimensioniert sind, daß bei maximal zulässigem Differenzdruck eine Durchströmung oder Umströmung der Endzone der Faserpackung (5) verhindert ist.

6. Phasentrennelement nach einem der Ansprüche 1 bis 5 dadurch gekennzeichnet, daß die Querschnittsfläche der Dichtringe (18,19) im wesentlichen ein rechtwinkliges Dreieck bilden mit einer an einer Anschlagfläche (8 oder 9) anliegenden Seite, einer dazu rechtwinkligen und mit der Mantelfläche der Faserpackung (5) fluchtenden Seite und einer gegen die Faserpackung (5) drückenden Seite.

7. Phasentrennelement nach einem der Ansprüche 1 bis 6, dadurch gekennzeichnet, daß die Dichtringe (18,19) mit dem Aufnahmeteil (1) beziehungsweise mit dem Kopfteil (2) verbunden sind.

8. Phasentrennelement nach einem der Ansprüche 1 bis 6, dadurch gekennzeichnet, daß die Dichtringe (18,19) aus einem Draht oder Band aus Kunststoff oder Metall gewickelt sind.

9. Phasentrennelement nach einem der Ansprüche 1 bis 8, dadurch gekennzeichnet, daß in der Anschlagfläche (8 oder 9) eine Ringnut (26) eingearbeitet ist, in die mittelbar oder unmittelbar der Dichtring (18 oder 19) verankert ist.

10. Phasentrennelement nach Anspruch 9, dadurch gekennzeichnet, daß die Ringnut (26) schwalbenschwanzartig hinterschnitten ist.

11. Phasentrennelement nach Anspruch 9 oder 10, dadurch gekennzeichnet, daß ein aus thermoplastischem Kunststoff, insbesondere Polyvinylidenfluorid (PVDF), bestehender Dichtring (18,19) formschlüssig in die Ringnut (26) eingesetzt ist.

12. Phasentrennelement nach einem der Ansprüche 1 bis 4 und 6 bis 11, dadurch gekennzeichnet, daß das Aufnahmeteil (1), das Kopfteil (2) und die Druckringe (18,19) aus thermoplastischem Kunststoff, vorzugsweise Polyvinylidenfluorid (PVDF), bestehen und die Druckringe (18,19) mit den Anschlagflächen (8,9) und der Faserpackung (5) verschweißt sind.

13. Phasentrennelement nach Anspruch 9 oder 10, dadurch gekennzeichnet, daß das Aufnahmeteil (1) und das Kopfteil (2) aus Metall bestehen und ein aus Metalldraht bestehender Dichtring (18,19) formschlüssig in die Ringnut (26) eingelötet ist

14. Phasentrennelement nach einem der Ansprüche 1 bis 13, dadurch gekennzeichnet, daß auf dem Aufnahmeteil (1) und dem Kopfteil (2) die Endbereiche der Faserpackung (5) umgreifende ringförmige Kappen (20,21) angebracht sind.

15. Phasentrennelement nach einem der Ansprüche 1 bis 5, dadurch gekennzeichnet, daß die Druckringe (18,19) aus im flüssigen Zustand auf die Endbereiche der Faserpackung (5) aufgegossenem Kunststoff bestehen.

16. Phasentrennelement nach Anspruch 15, dadurch gekennzeichnet, daß auch das Aufnahmeteil (1) und das Kopfteil (2) mit den Druckringen (18,19) auf die Endbereiche der Faserpackung (5) aufgegossen sind.

## Claims

1. A phase separation element for separating a liquid discontinuous auxiliary phase from a liquid main phase or aerosols from a gaseous main phase, having a base body consisting of a receiving member (1), a head member (2) and of a perforated supporting tube (3) which is located between and connects said receiving member (1) and said head member (2), and having a fibrous packing (5) which is wound onto said supporting tube (3) and projects the perforated portion (14) of said supporting tube (3) at both ends, whose end surfaces adjoin stop faces (8,9) of the receiving member (1) and the head member (2) and which is surrounded by a reinforcing band (6),
characterized in that a conical bead-like ring (10, 11), whose surface (24) inclining towards the supporting tube (5) is inclined towards the axis of the supporting tube (3) by an angle of less than 45° and whose crown (23) is spaced from the adjacent stop face (8,9), is located at each end portion of the fibrous packing (5) between the supporting tube (3) and the fibrous packing (5), and that sealing rings (18,19) which surround the fibrous packing (5) are located at the ends of the fibrous packing (5) and extend axially from the stop faces (8,9) approximately to the crowns (23) of the bead-shaped rings, and that the sealing rings (18,19) and the bead-like rings (10,11) are dimensioned in relation to the thickness and kind of the fibrous packing (5) in such a manner that in the case of a maximum admissible differential pressure flowing through or around the end portion of the fibrous packing is prevented.

2. The phase separation element according to claim 1 characterized in that the faces (24) of the bead-like rings (10,11) which are inclinded towards the supporting pipe (3) are inclined towards the axis of the supporting pipe (3) about an angle of approximately 30°.

3. The phase separation element according to claims 1 or 2 characterized in that the tops (23) of the bead-like rings are rounded and that the inclinded surfaces (24,25) tangentially lead into the round form of the top (23) at both sides thereof.

4. The phase separation element according to any one of claims 1 to 3 characterized in that the bead rings (10,11) are connected with the receiving member (1) or the top member (2) in the form of a single piece and that they form take-up collars (12,13) to accomodate the supporting tube (3).

5. A phase separation element for separating a liquid discontinuous auxiliary phase from a liquid main phase or aerosols from a gaseous main phase, having a base body of steel, in particular of stainless steel, which consists of a receiving member (1), a head member (2) and of a perforated supporting pipe (3) located between and connecting said receiving member (1) and said head member (2), and having a fibrous packing (5), whose end surfaces adjoin stop faces (8,9) of the receiving member (1) and the head member (2), which is wound onto said supporting pipe (3) projecting the perforated portion (14) of the supporting pipe (3) at both ends and which is surrounded by a reinforcing band (6),
characterized in that sealing rings (18,19) which surround and press together said fibrous packing (5) are located at the ends of said fibrous packing (5), said rings being dimensioned in relation to the thickness and kind of the fibrous packing (5) in such a manner that in the case of a maximum admissible differential pressure flowing through or around the end portion of the fibrous packing (5) is prevented.

6. The phase separation element according to any one of claims 1 to 5 characterized in that the cross-sectional area of the sealing rings (18,19) form a substantially rectangular triangle with a side adjoining one of the stop faces (8 or 9), a side at right angles thereto and in alignment with the surface area of the fibrous packing (5), and a side pressing against the fibrous packing (5).

7. The phase separation element according to any one of claims 1 to 6 characterized in that the sealing rings (18,19) are connected with the receiving member (1) and the head member (2), respectively.

8. The phase separation element according to any one of claims 1 to 6 characterized in that the sealing rings (18,19) are wound of a wire or tape made of a plastic material or metal.

9. The phase separation element according to any one of claims 1 to 8 characterized in that an annular groove (26) in which the sealing ring (18,19) is indirectly or directly anchored is provided in the stop face (8 or 9).

10. The phase separation element according to claim 9 characterized in that the annular groove (26) is provided with a dovetailed undercut.

11. The phase separation element according to claim 9 or 10 characterized in that a sealing ring (18,19) made up of a thermoplastic material, in particular polyvinylidene fluoride (PVDF), is inserted into said annular groove (26) with positive fit.

12. The phase separation element according to any one of claims 1 to 4 and 6 to 11 characterized in that the receiving member (1), the head member (2) and the pressure rings (18,19) consist of a thermoplastic material, preferably polyvinylidene fluoride (PVDF), and that the pressure rings (18,19) are welded to the stop faces (8,9) and the fibrous packing (5).

13. The phase separation element according to claim 9 or 10 characterized in that the receiving member (1) and the top member (2) consist of metal and that a sealing ring (18,19) consisting of a metal wire is soldered into the annular groove (26) with positive fit.

14. The phase separation element according to any one of claims 1 to 13 characterized in that ring-shaped caps (20,21) which grip around the end portions of the fibrous packing (5) are located on the receiving member (1) and the head member (2).

15. The phase separation element according to any one of claims 1 to 5 characterized in that the pressure rings (18,19) consist of a plastic material which has been poured onto the end portions of the fibrous packing (5) in liquid condition.

16. The phase separation element according to claim 15 characterized in that the receiving member (1) and the head member (2) with the pressure rings (18,19) are also poured onto the end portions of the fibrous packing (5).

## Revendications

1. L'élément de séparation de phases pour séparer une phase secondaire liquide discontinue provenant d'une phase principale humide ou d'aérosols d'une phase principale gazeuse avec un corps de base consistant en une partie-support (1), une partie de tête (2) et un tube central (3) perforé placé entre la partie-support (1) et la partie de tête (2), et reliant ces parties (1, 2) et un paquet de fibres (5) enroulé sur le tube central (3) dépassant des deux côtés la partie perforée (14) du tube central (3) dont les côtés frontaux touchent les surfaces de butée (8, 9) de la partie-support (1) et de la partie de tête (2) et qui est entouré d'un bandage protecteur (6),
caractérisé par le fait qu'un anneau à talon conique (10, 11) est respectivement placé aux extrémités du paquet de fibres (5) entre le tube central (3) et le paquet de fibres (5), la surface (24) de l'anneau à talon inclinée vers le tube central (3) est inclinée dans un angle inférieur à 45° par rapport à l'axe du tube central (3) et sa pointe (23) se trouve à distance de la surface de butée (8, 9) voisine et des anneaux d'étanchéité (18, 19) entourant le paquet de fibres (5) sont disposés aux extrémités du paquet de fibres (5), et s'étendent axialement des surfaces de butée (8, 9) approximativement jusqu'aux pointes (23) des anneaux à talon (10, 11) et les anneaux d'étanchéité (18, 19) et les anneaux à talon (10, 11) sont dimensionnés de telle manière par rapport à l'épaisseur et au type de paquet de fibres (5) qu'une traversée ou une solénation de la zone extrême du paquet de fibres soit empêchée en cas de pression différentielle maximale admise.

2. Elément de séparation de phase selon revendication 1, caractérisé par le fait que les surfaces (24) des anneaux à talon (10, 11) inclinées vers le tube central (3) sont inclinées dans un angle d'environ 30° par rapport à l'axe du tube central (3).

3. Elément de séparation de phase selon revendication 1 ou 2, caractérisé par le fait que les pointes (23) des anneaux à talon sont arrondies et que les surfaces inclinées (24, 25) vers les deux côtés des pointes (23) débouchent tangentiellement dans l'arrondi des pointes (23).

4. Elément de séparation de phase selon l'une des revendications 1 à 3, caractérisé par le fait que les anneaux à talon (10, 11) sont reliés en une seule pièce à la partie-support (1) ou à la partie de tête (2) et forment des collerettes (12, 13) destinées à loger le tube central (3).

5. Elément de séparation de phase destiné à séparer une phase secondaire liquide, discontinue provenant d'une phase principale liquide ou d'aérosols provenant d'une phase principale gazeuse avec un corps de base en acier, en particulier en acier inoxydable, composé d'une partie-support (1), d'une partie de tête (2) et d'un tube central (3) perforé placé entre la partie-support (1) et la partie de tête (2), et reliant ces parties (1, 2) et avec un paquet de fibres (5) enroulé sur le tube central (3) dépassant des deux côtés la partie perforée (14) du tube central (3) dont les côtés frontaux touchent les surfaces de butée (8, 9) de la partie-support (1) et de la partie de tête (2) et qui est entouré d'un bandage protecteur (6),
caractérisé par le fait que des anneaux d'étanchéité (18, 19) entourant et pressant le paquet de fibres (5) sont placés aux extrémités du paquet de fibres (5) et sont dimensionnés de telle manière par rapport à l'épaisseur et au type de paquet de fibres (5) qu'une traversée ou une solénation de la zone extrême du paquet de fibres soit empêchée en cas de pression différentielle maximale admise.

6. Elément de séparation de phase selon l'une des revendications 1 à 5 caractérisé par le fait que la section des anneaux d'étanchéité (18, 19) forme en gros un triangle rectangle avec un côté touchant une surface de butée (8 ou 9), un côté perpendiculaire à celui-ci et affleurant la surface de gainage du paquet de fibres (5) et un côté pressant contre le paquet de fibres (5).

7. Elément de séparation de phase selon l'une des revendications 1 à 6 caractérisé par le fait que les anneaux d'étanchéité (18, 19) sont reliés à la partie-support (1) respectivement à la partie de tête (2).

8. Elément de séparation de phase selon l'une des revendications 1 à 6 caractérisé par le fait que les anneaux d'étanchéité (18, 19) sont enroulés dans un fil ou un ruban en matière synthétique ou en métal.

9. Elément de séparation de phase selon l'une des revendications 1 à 8 caractérisé par le fait qu'une rainure annulaire (26), dans laquelle est ancrée directement ou indirectement l'anneau d'étanchéité (18 ou 19), est usinée dans la surface de butée (8 ou 9).

10. Elément de séparation de phase selon la revendication 9 caractérisé par le fait que la rainure annulaire (26) est recoupée en queue d'aronde.

11. Elément de séparation de phase selon l'une des revendications 9 ou 10 caractérisé par le fait qu'un anneau d'étanchéité (18, 19) en matière synthétique thermoplastique, en particulier du fluorure de polyvinylidène, est posé dans la rainure annulaire (26) en épousant sa forme.

12. Elément de séparation de phase selon l'une des revendications 1 à 4 et 6 à 11 caractérisé par le fait que la partie-support (1), la partie de tête (2) et les anneaux de pression (18, 19) sont en matière synthétique thermoplatique, de préférence en fluorure de polyvinylidène et que les anneaux de pression (18, 19) sont soudés avec les surfaces de butée (8, 9) et le paquet de fibres (5).

13. Elément de séparation de phase selon l'une des revendications 9 ou 10 caractérisé par le fait que la partie-support (1) et la partie de tête (2) sont en métal et qu'un anneau d'étanchéité (18, 19) en fil métallique est brasé dans la rainure annulaire (26) en épousant sa forme.

14. Elément de séparation de phase selon l'une des revendications 1 à 13 caractérisé par le fait que des calottes annulaires (20, 21) enveloppant les zones extrêmes du paquet de fibres (5) sont posées sur la partie-support (1) et la partie de tête (2).

15. Elément de séparation de phase selon l'une des revendications 1 à 5 caractérisé par le fait que les anneaux de pression (18, 19) sont en matière synthétique coulée à l'état liquide sur les zones extrêmes du paquet de fibres (5).

16. Elément de séparation de phase selon la revendication 15 caractérisé par le fait que la partie-support (1) et la partie de tête (2) sont également coulées avec les anneaux de pression (18, 19) sur les zones extrêmes du paquet de fibres (5).
